# EUROPÄISCHE PATENTANMELDUNG

(11) **EP 1 950 646 A2**
(43) Veröffentlichungstag der Anmeldung: **30.07.2008**
(21) Anmeldenummer: 08001374.1
(22) Anmeldetag: 25.01.2008
(51) Int. Cl.: G06F 3/023

(54) **Betrieb eines in Telekomunikationsnetzen nutzbaren Endgerätes**

(30) Priorität: 26.01.2007 DE 102007004959
(71) Anmelder: Vodafone Holding GmbH, 40213 Düsseldorf (DE)
(72) Erfinder: Pointon, Donald, Tokyo 106-0031 (JP)
(74) Vertreter: Weisbrodt, Bernd

(57) **Zusammenfassung**

Die vorliegende Erfindung betrifft ein Verfahren zum Betreiben eines in Telekommunikationsnetzen nutzbaren Endgerätes (1), insbesondere eines in Mobilfunknetzen betreibbaren mobilen Endgerätes (1), wobei das Endgerät (1) eine mehrere Tasten aufweisende Tastatur (4) zur Eingabe (10) von Zeichen durch Tastenbetätigung, eine wenigstens ein Wörterbuch (7, 8, 9) nutzende Worteingabehilfe (6) und wenigstens eine seitens des Endgerätes (1) ausführbare Editor-Anwendung aufweist, wobei einzelnen Tasten der Tastatur (4) zumindest teilweise mehrere Zeichen zugeordnet sind, die Worteingabehilfe (6) schon während einer durch Tastenbetätigung erfolgenden Eingabe (10) von Zeichen prognostizierend erkennt, welches Wort durch die Zeicheneingabe (10) wahrscheinlich eingegeben werden soll und wenigstens ein solches Wort (11) zur Zeicheneingabe vorschlägt und die Worteingabehilfe (6) mit der wenigstens einen Editor-Anwendung genutzt wird. Um eine verbesserte und umfangreichere Nutzung der Worteingabehilfe erzielen zu können, insbesondere hinsichtlich einer automatischen Berücksichtigung der sprachspezifischen Interpunktion von Zeichen im Rahmen der prognostizierender Erkennung von Wörtern bei der Zeicheneingabe, wird von der Worteingabehilfe (6) im Rahmen der prognostizierenden Erkennung bei der Eingabe (10) von Zeichen der jeweilige sprachspezifische Interpunktion berücksichtigt und wenigstens ein entsprechendes sprachspezifisches Interpunktionszeichen zur Zeicheneingabe vorgeschlagen.

Gegenstand der vorliegenden Erfindung ist ferner auch besagtes Endgerät (1).

## Beschreibung

Die vorliegende Erfindung betrifft ein Verfahren zum Betreiben eines in Telekommunikationsnetzen nutzbaren Endgerätes, insbesondere eines in Mobilfunknetzen betreibbaren mobilen Endgerätes, wobei das Endgerät eine mehrere Tasten aufweisende Tastatur zur Eingabe von Zeichen durch Tastenbetätigung, eine wenigstens ein Wörterbuch nutzende Worteingabehilfe und wenigstens eine seitens des Endgerätes ausführbare Editor-Anwendung aufweist, wobei einzelnen Tasten der Tastatur zumindest teilweise mehrere Zeichen zugeordnet sind, die Worteingabehilfe schon während einer durch Tastenbetätigung erfolgenden Eingabe von Zeichen prognostizierend erkennt, welches Wort durch die Zeicheneingabe wahrscheinlich eingegeben werden soll und wenigstens ein solches Wort zur Zeicheneingabe vorschlägt und die Worteingabehilfe mit: der wenigstens einen Editor-Anwendung genutzt wird.

Gegenstand der vorliegenden Erfindung ist ferner ein Endgerät zur Nutzung in Telekommunikationsetzen, insbesondere ein in Mobilfunknetzen betreibbares mobiles Endgerät, mit einer mehrere Tasten aufweisenden Tastatur zur Eingabe von Zeichen durch Tastenbetätigung, wobei einzelnen Tasten der Tastatur zumindest teilweise mehrere Zeichen zugeordnet sind, einer wenigstens ein Wörterbuch nutzenden Worteingabehilfe, wobei die Worteingabehilfe schon während einer durch Tastenbetätigung erfolgenden Eingabe von Zeichen prognostizierend erkennt welches Wort durch die Zeicheneingabe wahrscheinlich eingegeben werden soll und wenigstens ein solches Wort zur Zeicheneingabe vorschlägt, und mit wenigstens einer seitens des Endgerätes ausführbaren Editor-Anwendung, wobei die Worteingabehilfe mit der wenigstens einen Editor-Anwendung nutzbar ist.

Derartige Verfahren und Endgeräte sind im Stand der Technik in zahlreichen Ausgestaltungen und für unterschiedlichste Anwendungen bekannt, beispielsweise in Mobilfunknetzen betreibbare Mobilfunktelefone oder sogenannte in beziehungsweise an Festnetzen betreibbare Festnetztelefone. Diese Endgeräte weisen in der Regel hinsichtlich der Tastenanzahl reduzierte Tastaturen auf. Um die entsprechenden Zeichen einer Sprache mit diesen reduzierten Tastaturen - auch Kompakttastaturen genannt - erfassen bzw. eingeben zu können, sind einzelnen Tasten mehrere Zeichen zugeordnet. Beim sogenannten "Multi-Tapping" werden die einer Taste zugeordneten Zeichen durch mehrfache Betätigung der Taste ausgewählt. Die Zeicheneingabe ist entsprechend aufwändig.

Zur vereinfachten Eingabe von Zeichen, insbesondere mit hinsichtlich der Tastenanzahl reduzierten Kompakttastaturen, kommen verschiedene im Stand der Technik bekannte Worteingabehilfen, die schon während einer durch Tastenbetätigung erfolgenden Eingabe von Zeichen prognostizierend erkennen, welches Wort durch die Zeicheneingabe wahrscheinlich eingegeben werden soll zum Einsatz, beispielsweise das sogenannte "T9" (text on nine keys) der Tegic Communications Inc., das beispielsweise aus der EP 0 842 463 B1 oder der EP 1 256 871 A2 bekannt ist, oder das sogenannte "WordWise" der Eatoni Ergonomics Inc., das beispielsweise aus der CA 2 353 862 A1 bekannt ist. Wörter im Sinne der vorliegenden Erfindung sind dabei aufeinanderfolgend zusammengehörende Zeichen, umfassend Buchstaben, Ziffern und/oder Symbole. Mit derartigen Worteingabehilfen ist es möglich, mit reduzierten Tastenbetätigungen seitens Endgeräte Wörter einzugeben. Die Worteingabehilfen verwenden dabei teilweise erweiterbare Wörterbücher und erreichen mit verschiedenen Analyseverfahren, beispielsweise einer sogenannten Trigramm-Analyse bei der Worteingabehilfe "T9", eine sehr hohe Treffer-Quote bei der Ermittlung des jeweils gewünschten Wortes.

Seitens der im Stand der Technik bekannten mobilen Endgeräte werden entsprechende Worteingabehilfen im Zusammenhang mit sogenannten Editor-Anwendungen genutzt. Derartige Editor-Anwendungen sind beispielsweise in der Erstellung, Verarbeitung und/oder Verwaltung von nutzerindividuellen Nachrichten wie Kurzmitteilungen (SMS), der Erstellung, Verarbeitung und/oder Verwaltung von nutzerindividuellen Terminen, der Erstellung, Verarbeitung und/oder Verwaltung von Informationen über Kommunikationspartner wie Namen und Rufnummern der Kommunikationspartner, oder dergleichen Anwendungen gegeben beziehungsweise finden dort Anwendung.

Nachteilig bei den bisher bekannten Worteingabehilfen ist, dass die mitunter sprachspezifische Interpunktion von Zeichen keine Berücksichtigung findet, insbesondere nicht im Rahmen der prognostizierenden Erkennung von Wörtern bei der Zeicheneingabe.

Vor diesem Hintergrund liegt der vorliegenden Erfindung die Aufgabe zugrunde, ein Verfahren und ein Endgerät der Eingangs genannten Art bereitzustellen, bei welchem unter Meidung der beschriebenen Nachteile eine verbesserte und umfangreichere Nutzung der Worteingabehilfe erzielbar ist, insbesondere hinsichtlich einer automatischen Berücksichtigung der sprachspezifischen Interpunktion von Zeichen im Rahmen der prognostizierenden Erkennung von Wörtern bei der Zeicheneingabe.

Zur technischen Lösung wird mit der vorliegenden Erfindung ein Verfahren zum Betreiben eines in Telekommunikationsnetzen nutzbaren Endgerätes, insbesondere eines in Mobilfunknetzen betreibbaren mobilen Endgerätes, wobei das Endgerät eine mehrere Tasten aufweisende Tastatur zur Eingabe von Zeichen durch Tastenbetätigung, eine wenigstens ein Wörterbuch nutzende Worteingabehilfe und wenigstens eine seitens des Endgerätes ausführbare Editor-Anwendung aufweist, wobei einzelnen Tasten der Tastatur zumindest teilweise mehrere Zeichen zugeordnet sind, die Worteingabehilfe schon während einer durch Tastenbetätigung erfolgenden Eingabe von Zeichen prognostizierend erkennt, welches Wort durch die Zeicheneingabe wahrscheinlich eingegeben werden soll und wenigstens ein solches Wort zur Zeicheneingabe vorschlägt und die Worteingabehilfe mit der wenigstens einen Editor-Anwendung genutzt wird, vorgeschlagen, welches dadurch gekennzeichnet ist, dass von der Worteingabehilfe im Rahmen der prognostizierenden Erkennung bei der Eingabe von Zeichen die jeweilige sprachspezifische Interpunktion berücksichtigt und wenigstens ein entsprechendes sprachspezifisches Interpunktionszeichen zur Zeicheneingabe vorgeschlagen wird.

Der Erfindung liegt die Erkenntnis zugrunde, dass eine verbesserte und umfangreichere Nutzung der Worteingabehilfe erzielbar ist, wenn die Worteingabehilfe im Rahmen der prognostizierenden Erkennung bei der Eingabe von Zeichen aufgrund derselben die jeweilige sprachspezifische Interpunktion erkennt und berücksichtigt.

Vorteilhafterweise wird das wenigstens eine sprachspezifische Interpunktionszeichen nach durch Zeicheneingabe erfolgender Auswahl eines Wortvorschlags von der Worteingabehilfe zur Auswahl durch Zeicheneingabe vorgeschlagen.

Eine weitere vorteilhafte Ausgestaltung der Erfindung ist gekennzeichnet durch wenigstens eine Analyse von wenigstens einem eingegeben Wort hinsichtlich der jeweils möglichen sprachspezifischen Interpunktion des wenigstens einen Wortes und einer Nutzung des Analyseergebnisses durch die Worteingabehilfe für den Vorschlag zur Zeicheneingabe des wenigstens einen sprachspezifischen Interpunktionszeichens. In einer besonders vorteilhaften Ausgestaltung der Erfindung wird das wenigstens eine sprachspezifische Interpunktionszeichen mit dem wenigstens einen Wortvorschlag zur Zeicheneingabe von der Worteingabehilfe vorgeschlagen. Erfindungsgemäß ist so die Möglichkeit gegeben, entsprechende Interpunktionszeichen seitens der von der Worteingabehilfe genutzten Wörterbücher im Zusammenhang mit den entsprechenden Wörterbucheinträgen zu erfassen und zu verwalten. Insgesamt wird dadurch der Speicher- und/oder Verwaltungsaufwand bezüglich der Berücksichtigung der jeweiligen sprachspezifischen Interpunktion reduziert.

Eine weitere vorteilhafte Ausgestaltung der Erfindung ist gekennzeichnet durch eine Einstellung der Berücksichtigung der sprachspezifischen Interpunktion, vorzugsweise im Rahmen der Anwendung der Worteingabehilfe durch Tastenbetätigung. Erfindungsgemäß kann so von dem Nutzer des erfindungsgemäßen Verfahrens selbst bestimmt werden, ob die sprachspezifische Interpunktion im Rahmen einer Nutzung der Worteingabehilfe Anwendung finden soll oder nicht. Eine weitere vorteilhafte Ausgestaltung der Erfindung sieht vor, dass die Einstellung der Berücksichtigung der sprachspezifischen Interpunktion von dem Nutzer hinsichtlich individueller Bedürfnisse einstellbar ist. So kann der Nutzer vorteilhafterweise sprachspezifische Interpunktionen an seinen eigenen Sprachgebrauch und/oder Sprachstil anpassen.

Zur technischen Lösung der eingangs genannten Aufgabe wird mit der vorliegenden Erfindung ferner ein Endgerät zur Nutzung in Telekommunikationsnetzen, insbesondere ein in Mobilfunknetzen betreibbares mobiles Endgerät, mit einer mehrere Tasten aufweisenden Tastatur zur Eingabe von Zeichen durch Tastenbetätigung, wobei einzelnen Tasten der Tastatur zumindest teilweise mehrere Zeichen zugeordnet sind, einer wenigstens ein Wörterbuch nutzenden Worteingabehilfe, wobei die Worteingabehilfe schon während einer durch Tastenbetätigung erfolgenden Eingabe von Zeichen prognostizierend erkennt, welches Wort durch die Zeicheneingabe wahrscheinlich eingegeben werden soll und wenigstens ein solches Wort zur Zeicheneingabe vorschlägt und mit wenigstens einer seitens des Endgerätes ausführbaren Editor-Anwendung, wobei die Worteingabehilfe mit der wenigstens einen Editor-Anwendung nutzbar ist, vorgeschlagen, welches dadurch gekennzeichnet ist, dass die Worteingabehilfe im Rahmen der prognostizierenden Erkennung bei der Eingabe von Zeichen die jeweilige sprachspezifische Interpunktion berücksichtigt und wenigstens ein entsprechendes sprachspezifisches Interpunktionszeichen zur Zeicheneingabe vorschlägt.

Vorteilhafterweise schlägt die Worteingabehilfe das wenigstens eine sprachspezifische Interpunktionszeichen nach durch Zeicheneingabe erfolgender Auswahl eines Wortvorschlags zur Zeicheneingabe vor.

In einer weiteren vorteilhaften Ausgestaltung der Erfindung weist die Worteingabehilfe wenigstens eine Eingabeeinrichtung zur Analyse von wenigstens einem eingegebenen Wort hinsichtlich der jeweils möglichen sprachspezifischen Interpunktion des wenigstens einen Wortes auf, wobei die Worteingabehilfe für den Vorschlag zur Zeicheneingabe des wenigstens einen sprachspezifischen Interpunktionszeichens das Analyseergebnis nutzt. Vorteilhafterweise schlägt die Worteingabehilfe das wenigstens eine sprachspezifische Interpunktionszeichen mit dem wenigstens einen Wortvorschlag zur Zeicheneingabe vor.

Gemäß einer weiteren vorteilhaften Ausgestaltung der Erfindung weist das wenigstens eine Wörterbuch der Worteingabehilfe für wenigstens einen Wortvorschlag wenigstens ein Wort mit wenigstens einem sprachspezifischen Interpunktionszeichen auf. Erfindungsgemäß wird so eine direkte Zuordnung von Interpunktionszeichen zu den Wörtern gemäß Wörterbucheinträgen der Worteingabehilfe bewerkstelligt, welche insgesamt den Speicher- und/oder Verwaltungsaufwand erfindungsgemäßer sprachspezifischer Interpunktionszeichen im Rahmen einer Worteingabehilfe reduziert.

Gemäß einer weiteren vorteilhaften Ausgestaltung der Erfindung ist die Berücksichtigung der sprachspezifischen Interpunktion einstellbar, vorzugsweise im Rahmen der Anwendung der Worteingabehilfe durch Tastenbetätigung.

Vorteilhafterweise ist das erfindungsgemäße Endgerät ausgebildet und/oder eingerichtet zumindest teilweise ein erfindungsgemäßes Verfahren auszuführen.

Weitere Einzelheiten, Merkmale und Vorteile der Erfindung werden nachfolgend anhand des in der Figur der Zeichnung dargestellten Ausführungsbeispiels näher erläutert. Dabei zeigen:
- Fig. 1: in einer schematischen Darstellung ein erstes Ausführungsbeispiel eines erfindungsgemäß betriebenen Mobilfunktelefons und
- Fig. 2: in einer schematischen Darstellung ein zweites Ausführungsbeispiel eines erfindungsgemäß betriebenen Mobilfunktelefons.

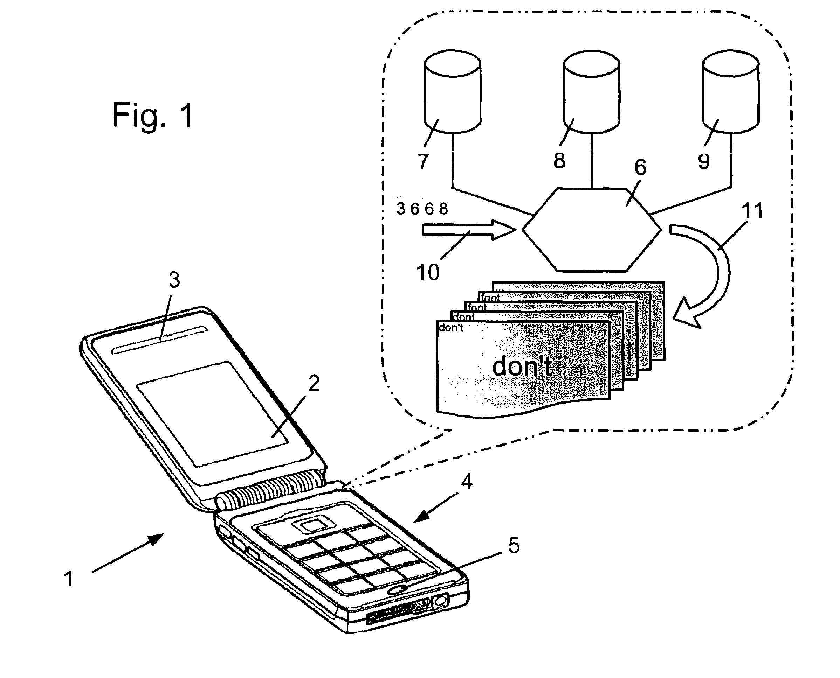

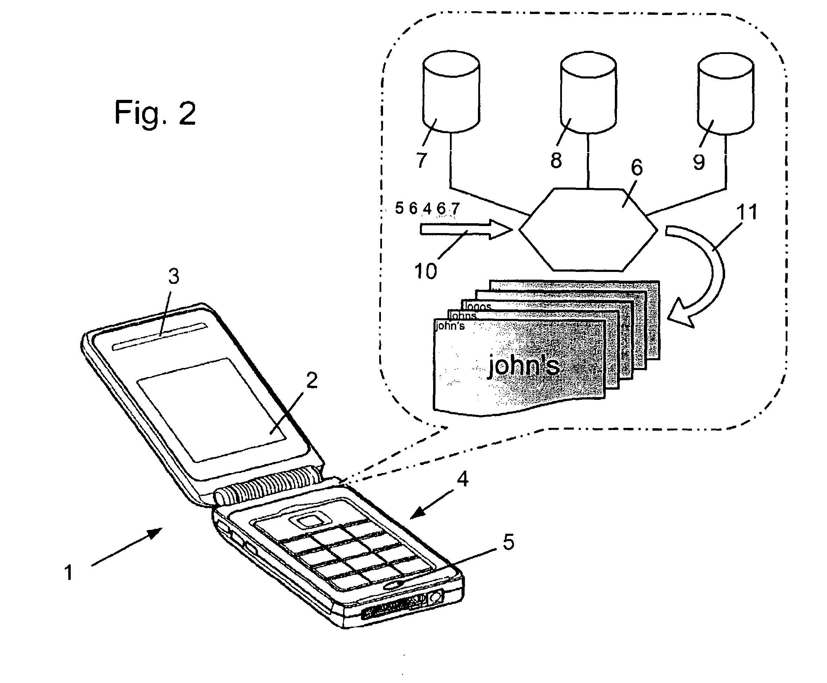

Die Fig. 1 und 2 zeigen ein in einem Mobilfunknetz betreibbares mobiles Endgerät 1, vorliegend in Form eines Mobilfunktelefons 1. Das Mobilfunktelefon 1 weist als Eingabeeinrichtungen zum einen eine mehrere Tasten aufweisende Tastatur 4 zur Eingabe von Zeichen durch Tastenbetätigung als auch ein Mikrofon 5 zur Eingabe von Sprache auf. Als Anzeigeeinrichtungen weist das Mobilfunktelefon 1 zum einen ein Display 2 zur optischen Wiedergabe von Informationen, insbesondere Zeichen, Bildern und/oder Bewegbildern sowie einen Lautsprecher 3 zur akustischen Wiedergabe von Signalen, insbesondere Sprache und/oder Musik, auf. Den einzelnen Tasten der Tastatur 4 sind vorliegend zumindest teilweise mehrere Zeichen zugeordnet, die durch entsprechende Betätigung der jeweiligen Taste zur Zeicheneingabe genutzt werden.

Seitens des Mobilfunktelefons 1 ist ein vorliegend die drei Wörterbücher 7, 8 und 9 nutzende Worteingabehilfe 6 implementiert. Die Wörterbücher 7, 8 und 9 sind dabei jeweils in einer Datenbank gespeichert. Alternativ können die Wörterbücher 7, 8 und 9 auch in einer Datenbank in unterschiedlichen Bereichen der Datenbank gespeichert werden. Die Worteingabehilfe 6 ist derart ausgebildet, dass diese schon während einer durch Betätigung von Tasten der Tastatur 4 erfolgenden Eingabe, in Fig. 1 und 2 symbolisch durch den mit dem Bezugszeichen 10 gekennzeichneten Pfeil dargestellt, prognostizierend erkennt, welches Wort durch die Zeicheneingabe 10 wahrscheinlich eingegeben werden soll. Die Worteingabehilfe 6 schlägt ein entsprechend prognostizierend erkanntes, wahrscheinlich durch die Zeicheneingabe einzugebendes Wort beziehungsweise durch Zeicheneingabe möglicherweise einzugebender Wörter vor. Das Vorschlagen von Wörtern ist in Fig. 1 und 2 symbolisch durch den mit 11 gekennzeichneten Pfeil dargestellt. Die Worteingabehilfe 6 wird dabei seitens des Mobilfunktelefons 1 in einer seitens des Mobilfunktelefons 1 ausführbaren Editor-Anwendung, beispielsweise zum Schreiben von Kurznachrichten (SMS). Der Wortvorschlag 11 beziehungsweise die Wortvorschläge 11 werden dabei von der Worteingabehilfe 6 im Rahmen der Editor-Anwendung seitens der als Display ausgebildeten Anzeigeeinrichtung 2 des Mobilfunktelefons 1 zur Auswahl zur weiteren Zeicheneingabe vorgeschlagen.

Die Worteingabehilfe 6 der in Fig. 1 und Fig. 2 dargestellten Mobilfunktelefone 1 ist derart ausgebildet, dass im Rahmen der prognostizierenden Erkennung bei der Eingabe 10 von Zeichen die jeweilige sprachspezifische Interpunktion berücksichtigt und wenigstens ein entsprechendes sprachspezifisches Interpunktionszeichen zur Zeicheneingabe vorgeschlagen wird. Die Worteingabehilfe 6 der Mobilfunktelefone 1 ist dabei derart ausgebildet, dass die sprachspezifischen Interpunktionszeichen gemeinsam mit dem Wortvorschlag zur Zeicheneingabe vorgeschlagen werden.

Bei dem in Fig. 1 dargestellten Ausführungsbeispiel ist über die Tasten der Tastatur 4 durch die Betätigung der mit den Ziffern "3", "6", "6" und "8" versehenen Tasten von der Worteingabehilfe 6 im Rahmen der die Worteingabehilfe 6 nutzenden Editor-Anwendung als Wortvorschlag 11 das Zeichen "don't", "dont", "font" und "foot" und weitere hier nicht explizit dargestellte Wortvorschläge zur weiteren Zeicheneingabe und/oder-auswahl in der Editor-Anwendung vorgeschlagen. Seitens des Zeichens "don't" wird dabei das entsprechende sprachspezifische Interpunktionszeichen" gemeinsam mit dem Wort beziehungsweise den Wörtern "don't" zur Auswahl durch Zeicheneingabe vorgeschlagen.

Bei dem in Fig. 2 dargestellten Ausführungsbeispiel ist über die Tasten der Tastatur 4 durch die Betätigung der mit den Ziffern "5", "3", "4", "6" und "7" versehenen Tasten von der Worteingabehilfe 6 im Rahmen der die Worteingabehilfe 6 nutzenden Editor-Anwendung als Wortvorschlag 11 das Zeichen "john's", "johns", und "logos" und weitere hier nicht explizit dargestellte Wortvorschläge zur weiteren Zeicheneingabe und/oder -auswahl in der Editor-Anwendung vorgeschlagen. Seitens des Zeichens "john's" wird dabei das entsprechende sprachspezifische Interpunktionszeichen " ' " gemeinsam mit dem Wort beziehungsweise den Wörtern "john's" zur Auswahl durch Zeicheneingabe vorgeschlagen.

Die in den Figuren der Zeichnung dargestellten Ausführungsbeispiele dienen lediglich der Erläuterung der Erfindung und sind für diese nicht beschränkend.

### Bezugszeichenliste:

- 1: Mobilfunktelefon
- 2: Anzeigeeinrichtung/Display
- 3: Anzeigeinrichtung/Lautsprecher
- 4: Eingabeeinrichtung/Tastatur
- 5: Eingabeeinrichtung/Mikrofon
- 6: Worteingabehilfe
- 7: Wörterbuch/Datenbank
- 8: Wörterbuch/Datenbank
- 9: Wörterbuch/Datenbank
- 10: Zeicheneingabe über Tastatur (4)
- 11: Wortvorschlag

## Patentansprüche

1. Verfahren zum Betreiben eines in Telekommunikationsnetzen nutzbaren Endgerätes (1),
insbesondere eines in Mobilfunknetzen betreibbaren mobilen Endgerätes (1),
wobei das Endgerät (1)
eine mehrere Tasten aufweisende Tastatur (4) zur Eingabe (10) von Zeichen durch Tastenbetätigung,
eine wenigstens ein Wörterbuch (7, 8, 9) nutzende Worteingabehilfe (6) und
wenigstens eine seitens des Endgerätes (1) ausführbare Editor-Anwendung
aufweist,
wobei
einzelnen Tasten der Tastatur (4) zumindest teilweise mehrere Zeichen zugeordnet sind,
die Worteingabehilfe (6) schon während einer durch Tastenbetätigung erfolgenden Eingabe (10) von Zeichen prognostizierend erkennt, welches Wort durch die Zeicheneingabe (10) wahrscheinlich eingegeben werden soll und wenigstens ein solches Wort (11) zur Zeicheneingabe vorschlägt und
die Worteingabehilfe (6) mit der wenigstens einen Editor-Anwendung genutzt wird,
**dadurch gekennzeichnet,**
**dass** von der Worteingabehilfe (6) im Rahmen der prognostizierenden Erkennung bei der Eingabe (10) von Zeichen die jeweilige sprachspezifische Interpunktion berücksichtigt und wenigstens ein entsprechendes sprachspezifisches Interpunktionszeichen zur Zeicheneingabe vorgeschlagen wird.

2. Verfahren nach Anspruch 1, **dadurch gekennzeichnet, dass** das wenigstens eine sprachspezifische Interpunktionszeichen nach durch Zeicheneingabe erfolgender Auswahl eines Wortvorschlags (11) von der Worteingabehilfe (6) zur Auswahl durch Zeicheneingabe vorgeschlagen wird.

3. Verfahren nach Anspruch 1 oder Anspruch 2, **gekennzeichnet durch** wenigstens eine Analyse von wenigstens einem eingegebenen Wort hinsichtlich der jeweils möglichen sprachspezifischen Interpunktion des wenigstens einen Wortes und einer Nutzung des Analyseergebnisses **durch** die Worteingabehilfe (6) für den Vorschlag zur Zeicheneingabe des wenigstens einen sprachspezifischen Interpunktionszeichens.

4. Verfahren nach Anspruch 3, **dadurch gekennzeichnet, dass** das wenigstens eine sprachspezifische Interpunktionszeichen mit dem wenigstens einen Wortvorschlag (11) zur Zeicheneingabe von der Worteingabehilfe (6) vorgeschlagen wird.

5. Verfahren nach einem der Ansprüche 1 bis 4, **gekennzeichnet durch** eine Einstellung der Berücksichtigung der sprachspezifischen Interpunktion, vorzugsweise im Rahmen der Anwendung der Worteingabehilfe (6) **durch** Tastenbetätigung.

6. Endgerät (1) zur Nutzung in Telekommunikationsnetzen,
insbesondere ein in Mobilfunknetzen betreibbares mobiles Endgerät (1),
mit
einer mehrere Tasten aufweisenden Tastatur (4) zur Eingabe (10) von Zeichen durch Tastenbetätigung, wobei einzelnen Tasten der Tastatur (4) zumindest teilweise mehrere Zeichen zugeordnet sind,
einer wenigstens ein Wörterbuch (7, 8, 9) nutzenden Worteingabehilfe (6), wobei die Worteingabehilfe (6) schon während einer durch Tastenbetätigung erfolgenden Eingabe (10) von Zeichen prognostizierend erkennt, welches Wort durch die Zeicheneingabe (10) wahrscheinlich eingegeben werden soll und wenigstens ein solches Wort (11) zur Zeicheneingabe vorschlägt,
und mit wenigstens einer seitens des Endgerätes (1) ausführbaren Editor-Anwendung, wobei die Worteingabehilfe (6) mit der wenigstens einen Editor-Anwendung nutzbar ist,
**dadurch gekennzeichnet,**
**dass** die Worteingabehilfe (6) im Rahmen der prognostizierenden Erkennung bei der Eingabe (10) von Zeichen die jeweilige sprachspezifische Interpunktion berücksichtigt und wenigstens ein entsprechendes sprachspezifisches Interpunktionszeichen zur Zeicheneingabe vorschlägt.

7. Endgerät (1) nach Anspruch 6, **dadurch gekennzeichnet, dass** die Worteingabehilfe das wenigstens eine sprachspezifische Interpunktionszeichens nach durch Zeicheneingabe erfolgender Auswahl eines Wortvorschlags zur Zeicheneingabe vorschlägt.

8. Endgerät (1) nach Anspruch 6 oder Anspruch 7, **dadurch gekennzeichnet, dass** die Worteingabehilfe (6) wenigstens eine Einrichtung zur Analyse von wenigstens einem eingegebenen Wort hinsichtlich der jeweils möglichen sprachspezifischen Interpunktion des wenigstens einen Wortes aufweist, wobei die Worteingabehilfe (6) für den Vorschlag zur Zeicheneingabe des wenigstens einen sprachspezifischen Interpunktionszeichens das Analyseergebnis nutzt.

9. Endgerät (1) nach Anspruch 6, **dadurch gekennzeichnet, dass** die Worteingabehilfe (6) das wenigstens eine sprachspezifische Interpunktionszeichen mit dem wenigstens einen Wortvorschlag (11) zur Zeicheneingabe vorschlägt.

10. Endgerät (1) nach Anspruch 9, **dadurch gekennzeichnet, dass** das wenigstens eine Wörterbuch (7, 8, 9) der Worteingabehilfe (6) für wenigstens einen Wortvorschlag (11) wenigstens ein Wort mit wenigstens einem sprachspezifischen Interpunktionszeichen aufweist.

11. Endgerät (1) nach einem der Ansprüche 6 bis 10, **dadurch gekennzeichnet, dass** die Berücksichtigung der sprachspezifischen Interpunktion einstellbar ist, vorzugsweise im Rahmen der Anwendung der Worteingabehilfe (6) durch Tastenbetätigung.

12. Endgerät (1) nach einem der Ansprüche 6 bis 11, **dadurch gekennzeichnet, dass** dieses zumindest teilweise zur Ausführung eines Verfahrens nach einem der Ansprüche 1 bis 5 ausgebildet und/oder eingerichtet ist.
